(19) Europäisches Patentamt
European Patent Office
Office européen des brevets

(11) Numéro de publication: **0 127 490**
**B1**

(12) # FASCICULE DE BREVET EUROPÉEN

(45) Date de publication du fascicule du brevet: **22.07.87**

(51) Int. Cl.[4]: **G 21 F 9/30**, G 21 F 9/16

(21) Numéro de dépôt: **84400727.8**

(22) Date de dépôt: **11.04.84**

(54) **Procédé de conditionnement de déchets contaminés en milieu acide, notamment de matériaux échangeurs de cations.**

(30) Priorité: **21.04.83 FR 8306572**

(43) Date de publication de la demande: **05.12.84 Bulletin 84/49**

(45) Mention de la délivrance du brevet: **22.07.87 Bulletin 87/30**

(84) Etats contractants désignés: **BE CH DE FR GB IT LI**

(56) Documents cité:
**FR-A-2 356 246**
**FR-A-2 361 724**
**FR-A-2 505 539**
**US-A-4 234 632**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **de Tassigny, Christian, 96, Rivoire de La Dame, F-38360 Sassenage (FR)**

(74) Mandataire: **Mongrédien, André, c/o BREVATOME 25, rue de Ponthieu, F-75008 Paris (FR)**

**EP 0 127 490 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

## Description

La présente invention a pour objet un procédé de conditionnement de déchets tels que des déchets radioactifs ou toxiques, dont l'acidité peut inhiber les réactions de polymérisation.

Elle s'applique en particulier au conditionnement de déchets comprenant principalement des matériaux échangeurs de cations, constitués par exemple par des résines cationiques ou par un mélange de résines cationiques et anioniques contaminées par des éléments radioactifs, ou d'autres matériaux à fonction acide, par exemple des sels sous forme de poudre ou de grains en milieu humide acide.

Elle s'applique également au conditionnement de déchets constitués par des poudres de concentrats d'évaporation (sels tels que borates, sulfates, chlorures), des résines échangeuses d'ions broyées sous forme usée à 65 % d'humidité et des déchets technologiques tels que des filtres, des copeaux métalliques, des plastiques, du bois etc...

Les résines échangeuses d'ions peuvent être notamment des résines de polystyrène réticulé avec du divinylbenzène, qui comportent des groupements sulfoniques $SO_3H$ (résines cationiques) ou un mélange de telles résines avec des résines de polystyrène réticulé avec du divinylbenzène qui comportent des fonctions OH fixées sur un groupement ammonium quaternaire (résines anioniques).

Lorsque des résines échangeuses de cations sont utilisées pour purifier des eaux contaminées, notamment les effluents d'installations nucléaires, elles subissent au bout d'un certain temps des phénomènes de dégradation et perdent en conséquence leur efficacité. Il s'agit alors de conditionner ces résines échangeuses d'ions usées qui ont fixé au cours de leur utilisation un certain nombre de radioéléments tout en assurant une bonne rétention de leur radioactivité.

Dans la demande de certificat d'addition EN 73/40005 déposée le 9/11/73 et publiée sous le numéro FR-A-2 251 081,on a décrit un procédé de conditionnement de déchets radioactifs applicable au conditionnement de résines échangeuses d'ions ayant servi à la purification des eaux contaminées, notamment des eaux de piles.

Selon ce procédé, on incorpore les résines échangeuses d'ions dans une résine thermodurcissable, polymérisable à la température ambiante, constituée par exemple par un polyester insaturé ou une résine époxyde, et on provoque ensuite la polymérisation de cette résine pour obtenir un bloc solide. Cependant, ce procédé qui est tout à fait satisfaisant pour les résines anioniques ne peut être utilisé selon le même mode opératoire pour des résines cationiques qui ne sont pas totalement usées, c'est-à-dire qui comportent encore des ions $H^+$.

En effet, on constate que, dans ce cas, la polymérisation de la résine thermodurcissable ne s'effectue pas totalement en raison de la présence de sites actifs sur les résines cationiques non usées, c'est-à-dire de la présence de protons $H^+$ qui sont capables de consommer certains des réactifs utilisés pour le durcissement de la résine.

Pour résoudre ce problème, on a soumis les résines échangeuses d'ions usées non totalement saturées à un prétraitement au moyen d'une solution aqueuse d'un composé basique capable de bloquer les sites actifs des résines cationiques, comme cela est décrit dans la demande de brevet français EN 76/24624 déposé le 12/8/76 et publiée sous le numéro FR-A- 2 361 724.

Cependant, la réalisation d'un tel prétraitement en phase liquide présente d'autres inconvénients. En effet, il nécessite une installation de prétraitement complémentaire en amont de l'installation de conditionnement et il entraîne de plus la production d'effluents contaminés résultant du relargage dans la phase liquide de prétraitement d'une partie des radioéléments qui étaient fixés sur les résines échangeuses d'ions.

La présente invention a pour objet un procédé de conditionnement de déchets contaminés dont l'acidité peut inhiber les réactions de polymérisation, notamment des matériaux échangeurs de cations, qui permet justement d'éviter les inconvénients des procédés antérieurs.

Le procédé, selon l'invention, consiste à incorporer lesdits déchets dans une résine époxyde liquide à la température ambiante et à provoquer ensuite la polymérisation de la résine au moyen d'un durcisseur pour obtenir un bloc solide, et il se caractérise en ce que le durcisseur comprend au moins un composé comportant au moins un groupe $NH_2$ en quantité suffisante pour polymériser la résine époxyde et bloquer l'acidité des déchets.

Selon un premier mode de réalisation du procédé de l'invention, on utilise une quantité de durcisseur telle qu'elle corresponde à un excés par rapport à la quantité nécessaire pour polymériser la résine époxyde, afin d'utiliser cet excés pour bloquer l'acidité des déchets ou les sites actifs des matériaux échangeurs de cations présents dans les déchets.

Ainsi, dans ce premier mode de réalisation du procédé de l'invention, on utilise l'excés de durcisseur pour neutraliser les sites $H^+$ des matériaux échangeurs de cations et obtenir ainsi des blocs solides présentant des propriétés satisfaisantes de rétention de la radioactivité.

Dans ce premier mode de réalisation du procédé de l'invention, la résine époxyde est avantageusement un diglycidyléther du bis-phénol A ayant un équivalent époxy de d'environ 190; la viscosité de la résine époxyde peut être réglée à une valeur appropriée par adjonction d'un diluant diréactif à faible tension de vapeur constitué par exemple par du néopentyldiglycidyléther.

Dans ce premier mode de réalisation du procédé de l'invention, les composés comportant au moins un groupe $NH_2$ susceptibles d'être utilisés, sont des amines cyclo-aliphatiques ou aromatiques, des polyamines aromatiques ou cyclo-aliphatiques, et des dérivés de la propyléne-amine. On peut aussi utiliser des polyaminoamides.

Le durcisseur peut être constitué par un composé de ce type, à l'état pur ou dissous dans un diluant approprié tel que l'alcool benzylique. Cependant, on préfére généralement les durcisseurs constitués par des"adducts",qui sont le produit de la réaction d'une faible quantité de la résine époxyde avec ce composé comportant au moins un groupement $NH_2$ éventuellement dissous par un diluant.

De préférence, dans le premier mode de réalisation du procédé de l'invention, le durcisseur est constitué par un mélange prépolymérisé ou "adduct" obtenu par réaction d'une faible quantité de la résine époxyde avec une amine aromatique.

De préférence, l'amine aromatique utilisée dans ce cas est le diamino-diphényl-méthane de formule:

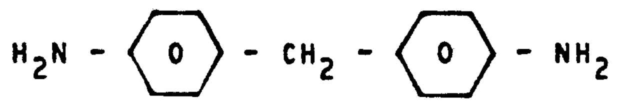 (DDM)

Dans certains cas, on utilise avantageusement un accélérateur de durcissement constitué par exemple par un sel obtenu par réaction d'acide acrylique, d'acide benzoïque, d'acide salicylique ou de phénols tels que la résorcine, avec l'amine aromatique.

La quantité de durcisseur utilisée pour obtenir la polymérisation et la réticulation de la résine époxyde dépend de la résine époxyde utilisée, en particulier de son équivalent époxyde, c'est-à-dire de la masse de résine contenant une fonction époxyde. Généralement pour obtenir le durcissement et la réticulation de la résine époxyde, on utilise une quantité de durcisseur telle qu'on ait une fonction amine $NH_2$ par équivalent époxyde de résine.

Dans le premier mode de réalisation du procédé de l'invention, pour bloquer l'acidité des déchets ou les sites actifs des matériaux échangeurs de cations, on utilise un excés de durcisseur qui dépend en particulier de la teneur en matériaux échangeurs de cations des déchets à traiter ou de l'acidité du déchet et du durcisseur utilisé. Généralement, on utilise un excés de durcisseur tel que le rapport en poids durcissseur/résine époxyde soit supérieur à 0,5. La quantité de durcisseur utilisée augmente par ailleurs avec la teneur en matériaux échangeurs de cations des déchets radioactifs ou leur acidité, et l'on peut utiliser un rapport en poids du durcisseur à la résine époxyde qui varie de 0,5 à 1,5 lorsque la teneur en matériaux échangeurs de cations des déchets varie de 0 à 100 %.

Selon un second mode de réalisation du procédé de l'invention, on choisit un durcisseur approprié de façon à réaliser, d'une part, le blocage des sites actifs des matériaux échangeurs de cations ou la neutralisation partielle ou totale de l'acidité et, d'autre part le durcissement de la résine époxyde sans avoir à utiliser un excés de durcisseur en teneur variable.

Dans ce cas, le durcisseur comprend des composés comportant:

- au moins un groupe $NH_2$ d'une polyamine aliphatique, et
- au moins un groupe $NH_2$ d'une amine aromatique.

Grâce au choix de ces composés, on peut obtenir dans de bonnes conditions la neutralisation des sites $H^+$ des matériaux échangeurs de cations et un durcissement satisfaisant de la résine époxyde. En effet, on suppose qu'une polyamine aliphatique qui présente une basicité importante, réalise préférentiellement la neutralisation des sites $H^+$ des matériaux échangeurs de cations ou de l'acidité des déchets. De plus, lors de cette neutralisation, ces polyamines sont transformées en sels d'amines qui jouent ensuite le rôle d'accélérateur de polymérisation et de réticulation de la résine époxyde.

Comme précédemment, les résines époxydes utilisées dans ce second mode de réalisation du procédé de l'invention, sont de préférence des diglycidyléther du bis-phénol A présentant un équivalent époxyde d'environ 190, et leur viscosité peut être également réglée par adjonction d'un diluant réactif tel que le néopentyl diglycidyléther.

Dans ce second mode de réalisation du procédé de l'invention, les polyamines susceptibles d'être utilisées sont des polyamines aliphatiques ou cycloaliphatiques. De préférence, on utilise une polyamine cycloaliphatique ayant un indice d'amine voisin de 63.

Dans ce second mode de réalisation du procédé de l'invention,l'amine aromatique utilisée est avantageusement le diaminodiphénylméthane (DDM) présenté de préférence sous la forme d'adduct avec une faible quantité de résine époxyde.

Comme précédemment, l'adduct peut comprendre un diluant non réactif tel que l'alcool benzylique et éventuellement un accélérateur de durcissement constitué par exemple par le produit de la réaction de l'acide acrylique, de l'acide benzoïque, de l'acide salicylique ou de phénols, résorcine par exemple, avec le diaminodiphénylméthane.

Toutefois, compte tenu de la forte réactivité de la polyamine cycloaliphatique et de sa transformation en sel, il n'est pas nécessaire d'ajouter un accélérateur de durcissement, le sel de polyamine formé lors de la neutralisation des sites actifs du matériau échangeur de cations jouant déjà le rôle d'accélérateur de durcissement.

Dans ce second mode de réalisation du procédé de l'invention, grâce au choix des composés comportant des groupes $NH_2$, et notamment à la présence d'un composé qui présente une basicité importante, il n'est pas nécessaire d'utiliser un excés de durcisseur en teneur variable pour obtenir, d'une part, le blocage des sites actifs des matériaux échangeurs de cations ou la neutralisation partielle ou totale de l'acidité des déchets et,

d'autre part, le durcissement de la résine époxyde. Généralement, on utilise une quantité de durcisseur telle que le rapport en poids durcisseur/résine époxyde soit supérieur à 0,5 par exemple de 0,6. Il n'est pas nécessaire d'utiliser une quantité plus importante de durcisseur lorsque la teneur en matériaux échangeurs de cations des déchets augmente. Par ailleurs, on obtient également de très bons résultats lorsque les déchets contaminés ne contiennent pas de matériaux échangeurs de cations. Ainsi, la composition de durcisseur du second mode de mise en oeuvre du procédé de l'invention se révèle particulièrement avantageuse puisqu'elle peut être utilisée pour le conditionnement de n'importe quel type de déchet contaminé.

Enfin, dans ce second mode de mise en oeuvre du procédé, on peut adapter le durcisseur en réglant le rapport polyamine aliphatique/amine aromatique en fonction du degré d'humidité des déchets. On peut aussi contrôler l'exothermicité de la réactionde polymérisation en réglant ce rapport polyamine aliphatique/amine aromatique. En effet, l'augmentation du taux d'amine aliphatique permet de tolérer une quantité d'eau plus importante dans les déchets. En revanche, l'augmentation du taux d'amine aromatique permet de diminuer l'exothermicité de la réaction de polymérisation. Aussi, dans ce second mode de mise en oeuvre du procédé de l'invention, le rapport polyamine aliphatique/amine aromatique est choisi de préférence en fonction de la teneur en eau des déchets à conditionner.

Dans les deux modes de réalisation du procédé de l'invention, on élimine ainsi l'étape de prétraitement qui était nécessaire selon l'art antérieur pour conditionner des déchets radioactifs contenant des matériaux échangeurs de cations. Ceci constitue un avantage important et permet de plus d'éviter la production de nouveaux effluents contaminés.

Par ailleurs, lorsqu'on utilise le durcisseur du second mode de réalisation du procédé de l'invention, on peut améliorer les caractéristiques des blocs obtenus, notamment leur résistance mécanique.

D'autres caractéristiques et avantages de l'invention apparaitront mieux à la lecture des exemples suivants donnés bien entendu à titre illustratif et non limitatif, en référence,au dessin annexé sur lequel:

- les figures 1 et 2 illustrent les variations de la dureté Shore de blocs obtenus selon l'invention en fonction du rapport en poids durcisseur/résine époxyde utilisé pour la préparation de ces blocs;
- les figures 3 et 4 sont des diagrammes permettant de déterminer le rapport optimal durcisseur/résine époxyde en fonction de la teneur en résine cationique d'un mélange de résines cationique et anionique;
- la figure 5 est un diagramme qui illustre les variations de la dureté Shore de blocs obtenus selon l'invention en fonction de la teneur en résine cationique (en%) du mélange de résines cationique et anionique traité.

**EXEMPLES 1 à 4**

Dans ces exemples, on étudie l'influence du rapport en poids durcisseur/résine époxyde sur le traitement de déchets radioactifs dont la teneur en résine cationique varie de 50 à 100 % en poids.

Ces déchets sont constitués par un mélange d'une résine cationique "C2OH" commercialisée par DIAPROSIM, et d'une résine anionique "ARA9366" commercialisée par DIAPROSIM. On utilise pour le conditionnement une résine époxyde constituée par un diglycidyléther du bis-phénol A ayant un équivalent époxyde d'environ 190 dilué par du néopentyl-diglycidyléther. Le durcisseur utilisé est un adduct de diaminodiphénylméthane (DDM).

Après avoir soumis le mélange de résine cationique etde résine anionique ou les résines cationiques à un essorage pour évacuer l'eau, on mélange les résines essorées avec la résine époxyde dans des proportions pondérales de résine époxyde qui peuvent varier de 40 % à 60 %, puis on ajoute au mélange la quantité voulue de durcisseur qui peut varier de façon telle que le rapport durcisseur/résine époxyde soit compris entre 0,5 et 1,5.

On effectue la réaction à la température ambiante (sensiblement 25° C) et on laisse la polymérisation se poursuivre pendant la durée voulue qui est généralement de plusieurs heures. Le fait que cette polymérisation s'effectue lentement permet d'étaler dans le temps la chaleur de la réaction et, en conséquence, il est ainsi possible de limiter l'élévation de la température au sein du milieu réactionnel à une température inférieure à 100° C.

Après polymérisation et durcissement, les blocs obtenus sont soumis à des essais de dureté pour tester leurs propriétés mécaniques. Les résultats obtenus sont donnés sur la figure 1 qui illustre les variations de la dureté Shore du bloc obtenu en fonction du rapport en poids durcisseur/époxyde utilisé pour la préparation de ce bloc.

Sur cette figure, la courbe (1) se rapporte à un mélange contenant 50% de résine cationique, la courbe (2) se rapporte à un mélange contenant 66 % de résine cationique, la courbe (3) se rapporte à un mélange contenant 85 % en poids de résine cationique et la courbe (4) se rapporte au traitement de déchets constitués uniquement par la résine cationique.

Au vu de ces courbes, on constate qu'il existe dans chaque cas une valeur optimale du rapport durcisseur/résine époxyde. Par ailleurs, on constate que ce rapport optimal augmente avec la teneur en résine cationique du mélange.

**EXEMPLES 5 à 7**

Dans ces exemples, on utilise des mélanges de résine anionique et de résine cationique, identiques à ceux utilisés dans les exemples 1 à 4, et on réalise le conditionnement de ces mélanges au moyen de la résine époxyde commercialisée par Ciba Geigy sous la marque XF431 et du durcisseur XF348 commercialisé également par Ciba Geigy.

On réalise l'enrobage de ces mélanges dans les mêmes conditions que celles des exemples 1 à 4, en utilisant des proposition pondérales de résine époxyde comprises entre 40 % et 60 %. On détermine ensuite comme précédemment la dureté Shore des blocs obtenus.

Les résultats obtenus sont donnés sur la figure 2 dont les courbes (5), (6) et (7) illustrent les variations de la dureté Shore en fonction du rapport durcisseur/résine époxyde lors du traitement de différents mélanges de résines anionique et cationique.

Sur cette figure:

- la courbe (5) se rapporte à un mélange contenant 33 % de résine cationique,
- la courbe (6) se rapporte à un mélange contenant 50 % de resine cationique, et
- la courbe (7) se rapporte à un mélange contenant 85 % de résine cationique.

Comme précédemment, on constate qu'il est nécessaire d'augmenter le rapport durcisseur/résine époxyde pour obtenir de bons résultats lorsque la teneur en résine cationique du mélange augmente.

A partir des courbes des figures 1 et 2, on peut tracer des graphiques permettant de déterminer quel est le rapport optimal durcisseur/résine époxyde lorsque la teneur en résine cationique des déchets augmente de 0 à 100 %.

Sur la figure 3, on a tracé la droite qui permet de déterminer le rapport durcisseur/résine époxyde en fonction de la teneur en résine cationique du mélange lorsqu'on utilise la résine époxyde et le durcisseur des exemples 1 à 4.

Sur la figure 4, on a tracé la droite qui permet de déterminer le rapport optimal durcisseur/résine époxyde en fonction de la teneur en résine cationique des déchets à traiter lorsqu'on utilise la résine époxyde et le durcisseur des exemples 5 à 7.

Au vu de ces deux figures, on constate que ce rapport augmente linéairement avec la teneur en résine cationique des déchets à traiter.

Ainsi, dans le cas de déchets radioactifs constitués par des lits mixtes dé résines provenant des installations de purification des eaux de piles, c'est-à-dire de lits qui contiennent généralement 2/3 de résine cationique et 1/3 de résine anionique, le rapport en poids durcisseur/résine époxyde peut être avantageusement d'environ 1,1 à 1,2.

**EXEMPLE 8**

Dans cet exemple, on réalise le conditionnement de mélanges contenant des résines anioniques et des résines cantioniques indentiques à celles des exemples 1 à 4, en utilisant le second mode de réalisation du procédé de l'invention.

Dans cet exemple, on utilise la même résine époxyde que dans les exemples 1 à 7, et un durcisseur composé d'un polyamine cycloaliphatique ayant un équivalent amine d'environ 63, et un adduct de diaminodiphénylméthane et de la résine époxyde ayant un équivalent amine d'environ 130, commercialisé par CdF Chimie sous la référence D6M4.

Après avoir soumis, comme dans les exemples 1 à 4, les résines cationiques et anioniques à un essorage pour évacuer l'eau, on mélange les résines essorées avec la résine époxyde dans des proportions pondérales de résine époxyde comprises entre 40 % et 60 %, puis on ajoute au mélange le durcisseur en quantité telle que le rapport durcisseur/résine époxyde soit de 0,6.

On effectue la réaction à la température ambiante (sensiblement à 20°C) et on laisse la polyérisation se poursuivre pendant plusieurs heures. On détermine alors comme dans les exemples 1 à 4, la dureté Shore des blocs obtenus, qui est comprise entre 55 et 65. Les résultats sont représentés sur la figure 5 qui illustre les variations de la dureté Shore des blocs en fonction de la teneur en résine cationique (en%) du mélange de résines traité.

Ainsi, le fait d'utiliser une combinaison d'amines et de polyamines permet, non seulement de réaliser le blocage des sites actifs des résines échangeuses de cations et le durcissement de la résine époxyde sans excès de durcisseur, mais d'obtenir de plus des caractéristiques mécaniques améliorées.

Les résultats d'essais de lixiviation effectués sur les blocs obtenus dans les exemples 2,4 et 8 ont donné les résultats suivants: les taux de lixiviation sont déterminés sur des enrobés selon les normes AIEA correspondant à des échantillons orthocylindriques de diamètre 50 mm. Les taux de lixiviation à 60 j sont tous inférieur à $4.10^{-7}$ $cm.j^{-1}$ pour le cobalt-60 et à $8\ 10^{-6}$ $cm.j^{-1}$ pour le cesium 137.

**EXEMPLE 9**

Cet exemple concerne l'enrobage d'un déchet humide en milieu acide: l'iodure de plomb qui est un déchet de retraitement. L'iodure de plomb est insoluble en milieu acide nitrique. On peut l'enrober dans des résines époxydes, conformément à l'invention et selon ses deux modes de réalisation.

Dans cet exemple, on utilise la second mode de réalisation de l'invention et on mélange 10 kg de dechet constitué d'iodure de plomb sec ou en suspension aqueuse jusqu'à 60 % en poids de la proportion du déchet, avec 6,3 kg de résine époxyde commercialisée sous la référence MN201T par CdF chimie et 3,7 kg d'un durcisseur constitué par le produit vendu sous la référence D6M5 par CdF Chimie, qui est composé, comme le durcisseur D6M4 de l'exemple 8, d'une polyamine cycloaliphatique ayant un équivalent amine d'environ 63 et d'un adduct de diaminodiphényl méthane et de la résine époxyde ayant un équivalent amine d'envioron 130, mais a une teneur en amine aliphatique inférieure à celle du dircosseir D6M4.

**EXEMPLE 10**

Dans cet exemple, on réalise le conditionnement de 100 kg de déchets constitués pour les 2/3 par des résines échangeuses de cations "Diaprosim C 20 H" et pour 1/3 par des résines échangeuses d'anions "Diaprosim ARA 93 66" ayant und humidité totale après essorage de 55 %. On mélange ces 100 kg de déchets à 63 kg de la résine époxyde MN 201T de l'exemple 9 et à 37 kg du durcisseur D6 M5 de l'exemple 9.

Dans ces conditions, après malaxage, la température au coeur de l'enrobé, reste inférieure à 100°C et la dureté Shore des blocs obtenus est d'environ 60 après 24h.

Les taux de lixiviation à 60 jours sont tous inférieurs à $4.10^{-7}$ $cm.jour^{-1}$ pour le cobalt-60 et à $8.10^{-6}$ $cm.jour^{-1}$ pour le césium 137.

**EXEMPLE 11**

On mélange 100 kg de déchets analogues à ceux traités dans l'exemple 10 avec 63 kg de résine époxyde commercialisée par CdF Chimie sous la référence MP 195 RD 07 et 37 kg du durcisseur D6 M5 de l'exemple 9.

Dans ces conditions, l'élévation de la température au sein du milieu réactionnel reste inférieure à 80° C. Cette diminution de l'exothermicité résulte de l'emploi de la résine époxyde MP 195 RD 07 dont le diluant réactif est différent du celui utilisé pour la résine époxyde MN 201 T.

**EXEMPLE 12**

Dans cet exemple, on réalise le conditionnement de 100 kg de déchets constitués pour 1/3 par une résine échangeuse d'anions "Diaprosim ARA 93 66" et pour 2/3 par des résines échangeuses de cations "Diaprosim C 20 H" ayant un taux d'humidité de 65 %, obtenus par enlèvement de l'eau surnageant au-dessus du mélange de résines échangeuses d'ions.

On mélange ces 100 kg de déchets à 63 kg de la résine époxyde MN 201 T de l'exemple 9 et à 37 kg du durcisseur D6M4 de l'exemple 8 qui est un durcisseur ayant une teneur en amine aliphatique supérieure à celle du durcisseur D6M5 utilisé dans les exemples 9 à 11.

Dans ces conditions, la dureté Shore des blocs obtenus est d'environ 60 après 24h et les taux de lixiviation sont identiques à ceux obtenus dans l'exemple 10.

**EXEMPLE 13**

Dans cet exemple, on traite 100 kg de déchets constitués par des concentrats d'évaporation sous forme de borates. On les mélange avec 40 kg de la résine époxyde MN 201 T de l'exemple 9 et 26 kg du durcisseur D6M5 de l'exemple 9. Après prise en masse du bloc, on obtient une dureté Shore supérieure à 70.

**EXEMPLE 14**

Dans cet exemple, on traite 100 kg de concentrat d'évaporation analogue à celui de l'exemple 13 en les mélangeant à 40 kg de résine epoxyde MN 201 commercialisée par CdF Chimie et 26 kg du durcisseur D6M5 de l'exemple 9, le rapport durcisseur/résine étant égal à 0,6.

Après durcissement, on dispose autour du bloc une couche de la même résine époxyde en utilisant le même durcisseur pour réaliser une barrière de confinement. On obtient ainsi un coefficient de diffusion en milieu aqueux pour le césium voisin de $10^{-13}$ $cm^2s$-1.

La résine époxyde MN 201 est une résine analogue à celle de l'exemple 13 mais elle n'est pas thixotropée.

**EXEMPLE 15**

On traite 100 kg de déchets métalliques sous forme de tube et de copeaux en acier par un mélange ayant la composition suivante:

- résine époxyde MN 201 T de l'exemple 9: 32 kg,
- durcisseur D6M5de l'exemple 9: 18 kg,
- sable: 50 kg.

Après malaxage et durcissement, on obtient ainsi des blocs présentant des propriétés satisfaisantes. On précise que l'addition d'une charge (sable) est indispensable pour éviter l'apparition de fissures en raison du retrait volumique de la résine époxyde lors de son durcissement.

**Revendications**

1. Procédé de conditionnement de déchets dont l'acidité peut inhiber les réactions de polymérisation, notamment des matériaux échangeurs de cations, consistant à incorporer lesdits déchets dans une résine époxyde liquide à la température ambiante et à provoquer ensuite la polymérisation de la rèsine au moyen d'un durcisseur pour obtenir un bloc solide, caractérisé en ce que le durcisseur comprend au moins un composé comportant au moins un groupe $NH_2$ en quantité suffisante pour bloquer l'aciditè des déchets et pour polymériser la résine époxyde.

2. Procédé selon la revendication 1, caractérisé en ce que la résine époxyde est un diglycidyléther du bisphénol A.

3. Procédé selon l'une quelconque des revendications 1 et 2, caractérisé en ce que la résine époxyde est diluée par un diluant diréactif.

4. Procédé selon la revendication 3, caractérisé en ce que le diluant diréactif est du néopentyldiglycidyléther.

5. Procédé selon l'une quelconque des revendications 1 à 4, caractérisé en ce que les déchets comprennent des résines échangeuses de cations.

6. Procédé selon l'une quelconque des revendications 1 à 5, caractérisé en ce que l'on utilise une quantité de durcisseur telle qu'elle corresponde à un excès par rapport à la quantité nécessaire pour polymériser la résine époxyde, afin d'utiliser cet excès pour bloquer l'acidité des déchets ou les sites actifs des matériaux échangeurs de cations présents dans lesdits déchets.

7. Procédé selon la revendication 6, caractérisé en ce que le rapport en poids du durcisseur à la résine époxyde est comprise entre 0,5 et 1,5.

8. Procédé selon l'une quelconque des revendications 6 et 7, caractérisé en ce que le composé comportant au moins un groupe $NH_2$ est choisi parmi les amines cycloaliphatiques ou aromatiques, les polyamines aromatiques ou cycloaliphatiques, et les dérivés de la propylène-amine.

9. Procédé selon l'une quelconque des revendications 6 à 8, caractérisé en ce que le durcisseur est constitué par un mélange prépolymérisé obtenu par réaction d'une faible quantité de la résine époxyde avec une amine et/ou une polyamine.

10. Procédé selon la revendication 9, caractérisé en ce que le durcisseur est constitué par un mélange prépolymérisé obtenu par réaction d'une faible quantité de la résine époxyde avec une amine aromatique.

11. Procédé selon la revendication 10, caractérisé en ce que l'amine aromatique est le diaminodiphénylméthane.

12. Procédé selon l'une quelconque des revendications 10 et 11, caractérisé en ce que le durcisseur comprend de plus un accélérateur de durcissement.

13. Procédé selon la revendication 12, caractérisé en ce que l'accélérateur de durcissement est un sel obtenu par réaction d'acide acrylique, d'acidebenzoïque, d'acide salicylique, de phénol ou de résorcine avec l'amine aromatique.

14. Procédé selon l'une quelconque des revendications 1 à 5, caractérisé en ce que le durcisseur comprend des composés comportant:

- au moins un groupe $NH_2$ d'une polyamine aliphatique, et
- au moins un groupe $NH_2$ d'une amine aromatique.

15. Procédé selon la revendication 14, caractérisé en ce que la polyamine aliphatique est une polyamine cycloaliphatique ayant un indice d'amine voisin de 63.

16. Procédé selon l'une quelconque des revendications 14 et 15, caractérisé en ce que l'amine aromatique est un adduct du diaminodiphénylméthane.

17. Procédé selon l'une quelconque des revendications 14 à 16, caractérisé en ce que dans ledit durcisseur le

rapport polyamine aliphatique/amine aromatique est choisi en fonction de la teneur en eau des déchets à conditionner.

**Patentansprüche**

1. Verfahren zur Konditionierung von Abfällen, deren Acidität Polymerisationsreaktionen inhibieren kann, insbesondere von Kationenaustauschermaterialien, das darin besteht, daß man die genannten Abfälle in ein bei Umgebungstemperatur flüssiges Epoxidharz einarbeitet und anschließend die Polymerisation des Harzes unter Verwendung eines Härters durchführt unter Bildung eines festen Blockes, dadurch gekennzeichnet, daß der Härter umfaßt mindestens eine Verbindung, die mindestens eine $NH_2$-Gruppe enthält, in einer Menge, die ausreicht, um die Acidität der Abfälle zu blockieren und um das Epoxidharz zu polymerisieren.

2. Verfahren nach Anspruch 1, dadurch gekennzeichnet, daß es sich bei dem Epoxidharz um einen Diglycidyläther von Bisphenol A handelt.

3. Verfahren nach einem der Ansprüche 1 und 2, dadurch gekennzeichnet, daß das Epoxidharz durch ein zweifach reaktives Verdünnungsmittel verdünnt wird.

4. Verfahren nach Anspruch 3, dadurch gekennzeichnet, daß es sich bei dem zweifach reaktiven Verdünnunosmittel um Neopentyldiglycidyläther handelt.

5. Verfahren nach einem der Ansprüche 1 bis 4, dadurch gekennzeichnet, daß die Abfälle Kationenaustauscherharze umfassen.

6. Verfahren nach einem der Ansprüche 1 bis 5, dadurch gekennzeichnet, daß man den Härter in einer Menge verwendet, die einem Überschuß entspricht, bezogen auf die zur Polymerisation des Epoxidharzes erforderliche Menge, um diesen Überschuß auszunutzen zum Blockieren der Acidität der Abfälle oder der aktiven Zentren der Kationenaustauschermaterialien, die in den Abfällen enthalten sind.

7. Verfahren nach Anspruch 6, dadurch gekennzeichnet, daß das Gewichtsverhältnis zwischen Härter und Epoxidharz zwischen 0,5 und 1,5 liegt.

8. Verfahren nach einem der Ansprüche 6 und 7, dadurch gekennzeichnet, daß die Verbindung, die mindestens eine $NH_2$-Gruppe aufweist, ausgewählt wird aus cycloaliphatischen oder aromatischen Aminen, aromatischen oder cycloaliphatischen Polyaminen und Propylenaminderivaten.

9. Verfahren nach einem der Ansprüche 6 bis 8, dadurch gekennzeichnet, daß der Härter besteht aus einer vorpolymerisierten Mischung, wie sie erhalten wird bei der Umsetzung einer geringen Menge des Epoxidharzes mit einem Amin und/oder einem Polyamin.

10. Verfahren nach Anspruch 9, dadurch gekennzeichnet, daß der Härter besteht aus einer vorpolymerisierten Mischung, wie sie erhalten wird durch Umsetzung einer geringen Menge des Epoxidharzes mit einem aromatischen Amin.

11. Verfahren nach Anspruch 10, dadurch gekennzeichnet, daß es sich bei dem aromatischen Amin um Diaminodiphenylmethan handelt.

12. Verfahren nach einem der Ansprüche 10 und 11, dadurch gekennzeichnet, daß der Härter darüber hinaus einen Härtungsbeschleuniger umfaßt.

13. Verfahren nach Anspruch 12, dadurch gekennzeichnet, daß es sich bei dem Härtungsbeschleuniger um ein Salz handelt, das erhalten wird durch Umsetzung von Acrylsäure, Benzoesäure, Salicylsäure, Phenol oder Resorcin mit dem aromatischen Amin.

14. Verfahren nach einem der Ansprüche 1 bis 5, dadurch gekennzeichnet, daß der Härter Verbindungen umfaßt, die aufweisen:
- mindestens eine $NH_2$-Gruppe eines aliphatischen Polyamins und
- mindestens eine $NH_2$-Gruppe eines aromatischen Amins.

15. Verfahren nach Anspruch 14, dadurch gekennzeichnet, daß es sich bei dem aliphatischen Polyamin um ein cycloaliphatisches Polyamin mit einem Aminindex von etwa 63 handelt.

16. Verfahren nach einem der Ansprüche 14 und 15, dadurch gekennzeichnet, daß es sich bei dem aromatischen Amin um ein Addukt des Diaminodiphenylmethans handelt.

17. Verfahren nach einem der Ansprüche 14 bis 16, dadurch gekennzeichnet, daß in dem Härter das Verhältnis aliphatisches Polyamin/aromatisches Amin als Funktion des Wassergehaltes der zu konditionierenden Abfälle ausgewählt wird.

**Claims**

1. Process for conditioning wastes, the acidity of which may inhibit polymerization reactions, especially cation exchange materials, which consists in incorporating the said wastes into an epoxy resin which is liquid at ambient temperature and then in bringing about the polymerization of the resin by means of a hardener in order to obtain a solid block, characterized in that the hardener comprises at least one compound which comprises at least one $NH_2$ group in a quantity sufficient to block the acidity of the wastes and to polymerize the epoxy resin.

2. Process according to Claim 1, characterized in that the epoxy resin is a diglycidyl ether of bisphenol A.

3. Process according to either of Claims 1 and 2, characterized in what the epoxy resin is diluted with a bifunctional reactive diluent.

4. Process according to Claim 3, characterized in that the bifunctional reactive diluent is neopentyldiglycidyl ether.

5. Process according to any one of Claims 1 to 4, characterized in that the wastes include cation exchange resins.

6. Process according to any one of Claims 1 to 5, characterized in that a quantity of hardener is used such that it corresponds to an excess compared with the quantilty required to polymerize the epoxy resin, so as to use this excess in order to block the acidity of the wastes or the active sites on the cationic exchange materials in the said wastes.

7. Process according to Claim 6, characterized in that the ratio by weight of the hardener to the epoxy resin is between 0.5 and 1.5.

8. Process according to either of Claims 6 and 7, characterized in that the compound containing at least one $NH_2$ group is chosen from amongst alicyclic or aromatic amines, aromatic or alicyclic polyamines, and propyleneamine derivatives.

9. Process according to any one of Claims 6 to 8, characterized in that the hardener consists of a prepolymerized mixture obtained by the reaction of a small quantity of the epoxy resin with an amine and/or a polyamine.

10. Process according to Claim 9, characterized in that the hardener consists of a prepolymerized mixture obtained by the reaction of a small quantity of the epoxy resin with an aromatic amine.

11. Process according to Claim 10, characterized in that the aromatic amine is diaminodiphenyl methane.

12. Process according to either of Claims 10 and 11, characterized in that the hardener additionally comprises a hardening accelerator.

13. Process according to Claim 12, characterized in that the hardening accelerator is a salt obtained by the reaction of acrylic acid, benzoic acid, salicylic acid, phenol of resorcinol with the aromatic amine.

14. Process according to any one of Claims 1 to 5, characterized in that the hardener comprises compounds comprising:

- at least one $NH_2$ group of an aliphatic polyamine, and
- at least one $NH_2$ group of an aromatic amine.

15. Process according to Claim 14, characterized in that the aliphatic polyamine is an alicyclic polyamine which has an amine number close to 63.

16. Process according to either of Claims 14 ard 15, characterized in that the aromatic amine is an adduct of diaminodiphenyl methane.

17. Process according to any one of Claims 14 to 16, characterized in that in the said hardener, the aliphatic polyamine/aromatic amine ratio is chosen depending on the water content of the wastes to be conditioned.

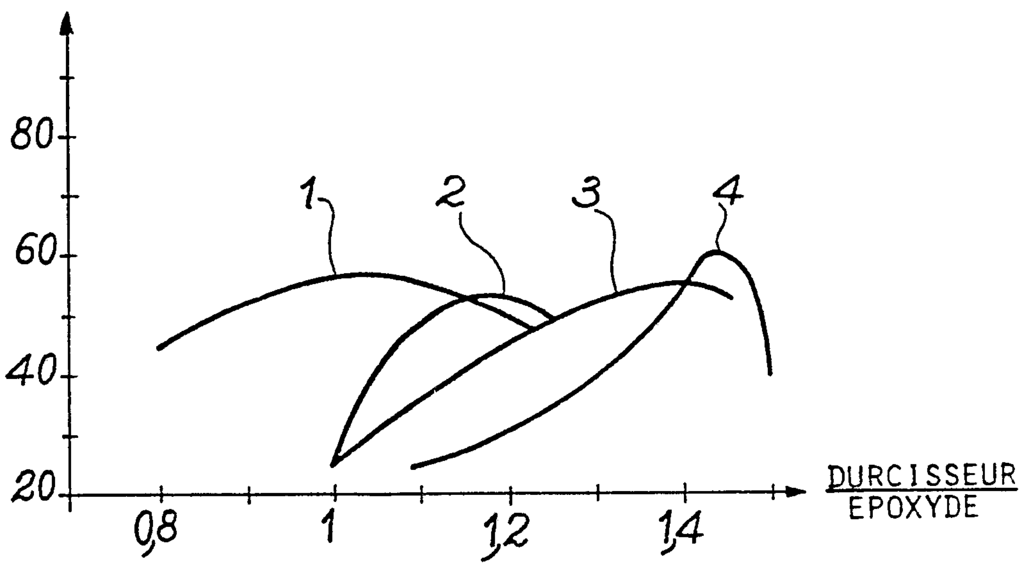
80
60
40
20
1
2
3
4
0,8
1
1,2
1,4
DURCISSEUR
EPOXYDE

FIG. 1

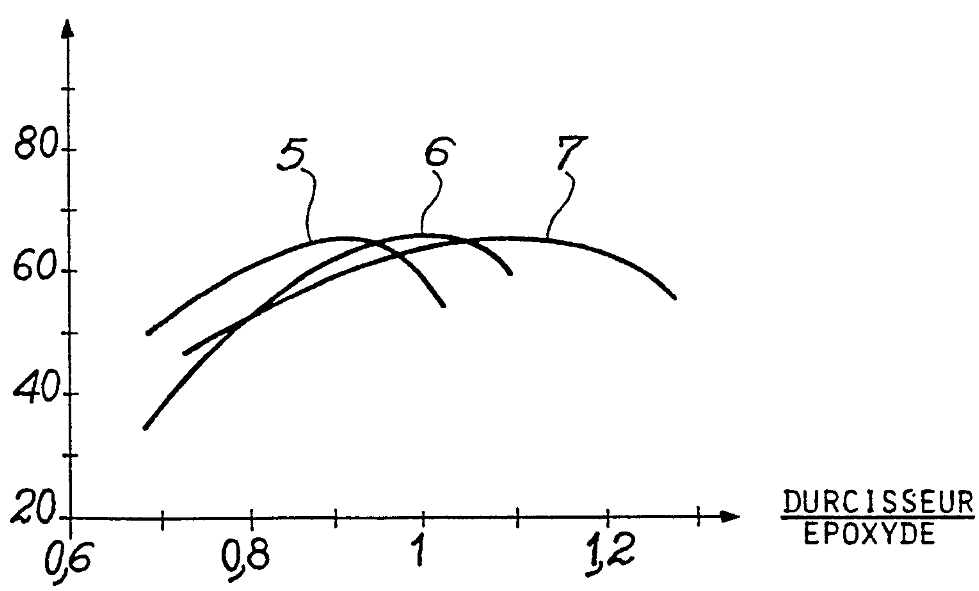
80
60
40
20
5
6
7
0,6
0,8
1
1,2
DURCISSEUR
EPOXYDE

FIG. 2

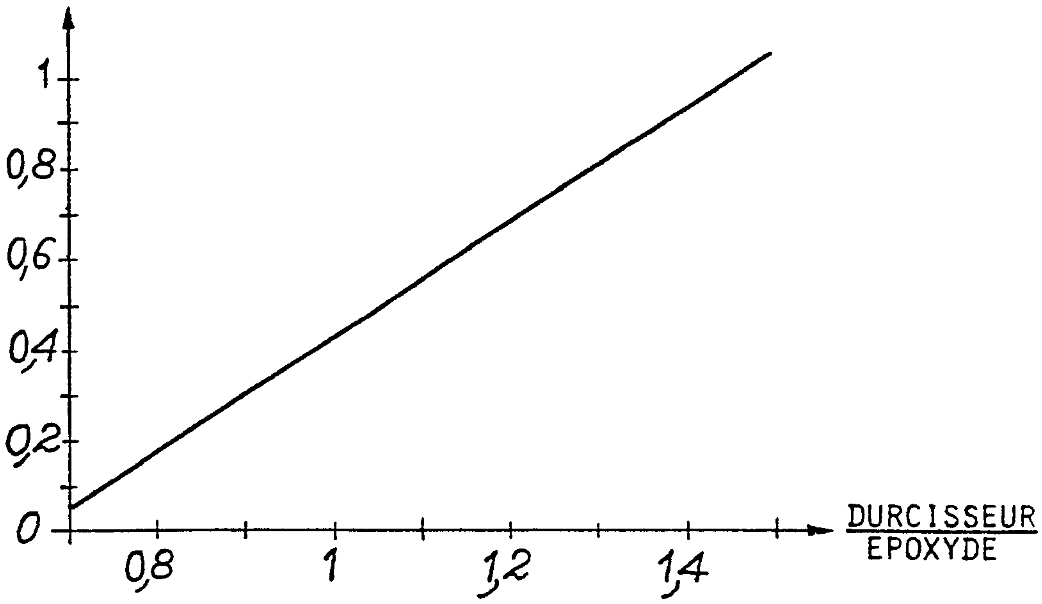
1
0,8
0,6
0,4
0,2
0
0,8
1
1,2
1,4
DURCISSEUR
EPOXYDE

FIG. 3

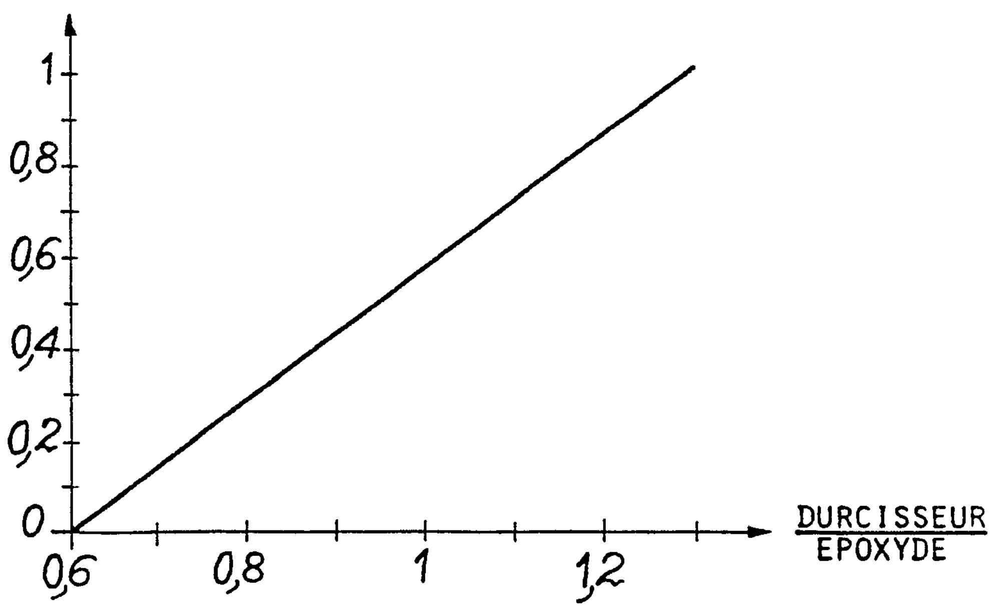
1
0,8
0,6
0,4
0,2
0
0,6
0,8
1
1,2
DURCISSEUR
EPOXYDE

FIG. 4

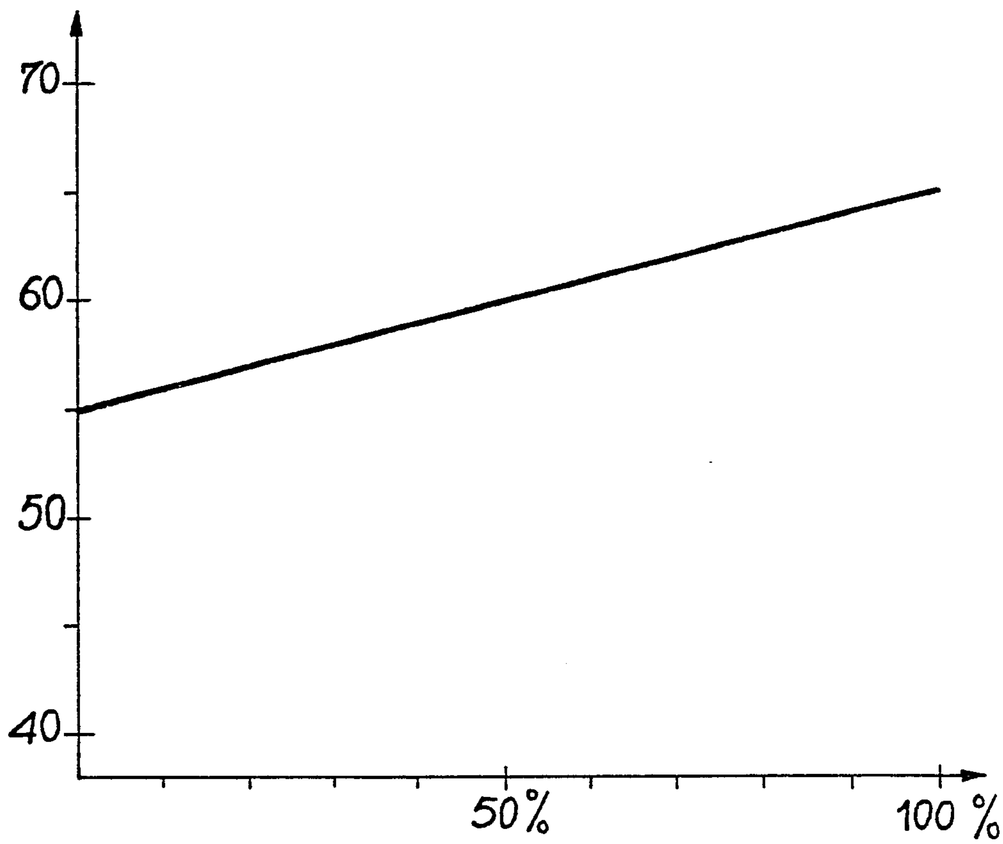


FIG. 5